# EUROPEAN PATENT APPLICATION

(11) **EP 4 375 040 A1**
(43) Date of publication of application: **29.05.2024**
(21) Application number: 23211615.2
(22) Date of filing: 22.11.2023
(51) Int. Cl.: B29C 35/02, B29C 33/02, B29C 33/06, B29C 33/30, B29C 33/38, B29C 35/08, B29C 70/30

(54) **METHOD OF SUPPORTING A FACESHEET ON A SUPPORT STRUCTURE WITH DIFFERING AMOUNTS OF EXPANSION**

(30) Priority: 23.11.2022 US 202263384800 P; 17.11.2023 US 202318512370
(71) Applicant: Spirit AeroSystems, Inc., Wichita, KS 67210 (US)
(72) Inventor: WADSWORTH, Mark Anthony, Wichita, 67210 (US); FIEGENBAUM, Carl Ray, Wichita, 67210 (US)
(74) Representative: HGF

(57) **Abstract**

A composite laminate heating tool broadly comprising a substructure, a facesheet, and number of expansion joints. The substructure supports the facesheet but does not need to have the same or a similar CTE as the facesheet because the facesheet is free to expand relative to the substructure. The expansion joints provide an interface between the facesheet and the substructure so that the facesheet can thermally expand relative to the substructure while being fully supported by the substructure. Each expansion joint includes a guide attached to the substructure and a support member translatable relative to the guide and aligned radially from a centroid or center of expansion of the facesheet so as to have a single degree of freedom.

## Description

### RELATED APPLICATIONS

This patent application claims priority benefit with regard to all common subject matter of U.S. Provisional Patent Application Serial No. 63/384,800, filed November 23, 2022, and US Patent Application Serial No. US 18/512,370, entitled METHOD OF SUPPORTING A FACESHEET ON A SUPPORT STRUCTURE WITH DIFFERING AMOUNTS OF EXPANSION. Application Nos. US 63/384,800 and US 18/512,370are hereby incorporated by reference into the present application in their entirety.

### BACKGROUND

Most of the mass of a tool used for curing or melting composite laminates is in the substructure. This mass must be heated and cooled for each cure or melt cycle such that much of the energy used and in some cases the cycle time is determined by the total tool mass. Furthermore, when the entire tool is heated, the coefficient of thermal expansion (CTE) of the tool facesheet has to match the CTE of the substructure or distortion will occur. Since low CTE materials such as carbon fiber laminates or Invar metal are expensive, making the substructure from these materials increases the tool cost.

In many cases, the means of heating the tool also limits the ability or desire to heat the substructure. For example, when heating the facesheet with electric heaters or induction coils, it is highly desirable to not heat the substructure since each portion of the substructure may need its own control feedback loop and controller. Attempting to heat and insulate the substructure in a controlled fashion to avoid distortion can be expensive and time consuming to set up and operate.

### SUMMARY

Embodiments of the present invention solve the above-mentioned problems and other problems and provide a distinct advance in the art of tools for heating composite materials. More particularly, embodiments of the invention provide a composite heating tool that more effectively heats composite laminates for forming a composite part while ameliorating many of the complications associated therewith.

An embodiment is a composite laminate heating tool broadly comprising a substructure, a facesheet, and a number of expansion joints. The substructure supports the facesheet but does not need to have the same or a similar CTE as the facesheet because the facesheet is free to expand relative to the substructure.

The expansion joints provide an interface between the facesheet and the substructure so that the facesheet can thermally expand relative to the substructure while being fully supported by the substructure. To that end, each expansion joint includes a guide attached to the substructure and a support member translatable relative to the guide and aligned radially from a centroid of expansion of the facesheet so as to have a single degree of freedom.

Another embodiment is a composite laminate heating tool broadly comprising a substructure, a facesheet, and number of expansion joints. As with the previous embodiment, the substructure supports the facesheet but does not need to have the same or a similar CTE as the facesheet because the facesheet is free to expand relative to the substructure.

The expansion joints provide an interface between the facesheet and the substructure so that the facesheet can thermally expand relative to the substructure while being fully supported by the substructure. To that end, each expansion joint includes a guide attached to the substructure and a support member translatable relative to the guide so as to have a single degree of freedom. The centroid of expansion may be a centre of expansion coinciding with a fixed point on the facesheet. In embodiments, the facesheet is also attached to the substructure at a fixed point representing a center of expansion of the facesheet. Each of the support members are aligned radially from the center of expansion of the facesheet.

Yet another embodiment is a method of forming a tool for heating composite laminates. The method comprises steps of determining a centroid of expansion of the tool, forming a facesheet having a first surface for laying up the composite laminates thereon and a second surface opposite the first surface, fabricating a substructure, attaching guides to the substructure, forming through-holes in the guides so that the through-holes are radially aligned with the centroid of expansion, inserting support members into the through-holes, bonding the support members to the second surface of the facesheet to form an expansion gap between the facesheet and the substructure, subjecting the facesheet and the substructure to normalization heat treatment, and installing a heat component in the expansion gap. The support members are thereby translatable relative to the guides and radially aligned with the centroid of expansion so as to have a single degree of freedom such that the facesheet is fully supported by the substructure via the support members of the expansion joints and can freely expand relative to the centroid of expansion.

This summary is provided to introduce a selection of concepts in a simplified form that are further described below in the detailed description. This summary is not intended to identify key features or essential features of the claimed subject matter, nor is it intended to be used to limit the scope of the claimed subject matter.

Other aspects and advantages of the present invention will be apparent from the following detailed description of the embodiments and the accompanying drawing figures.

### BRIEF DESCRIPTION OF THE DRAWING FIGURES

Embodiments of the present invention are described in detail below with reference to the attached drawing figures, wherein:
FIG. 1A is a side elevation view of a composite laminate heating tool constructed in accordance with an embodiment of the invention;
FIG. 1B is an enlarged view of a portion of the composite laminate heating tool of FIG. 1A;
FIG. 2 is a plan view of the composite laminate heating tool of FIG. 1A;
FIG. 3 is a side elevation view of the composite laminate heating tool of FIG. 1A taken along the lines 3-3;
FIG. 4 is a flow diagram depicting certain method steps according to another embodiment of the invention; and
FIG. 5 is a side elevation view of a composite laminate heating tool constructed in accordance with another embodiment of the invention.

The drawing figures do not limit the present invention to the specific embodiments disclosed and described herein. The drawings are not necessarily to scale, emphasis instead being placed upon clearly illustrating the principles of the invention.

### DETAILED DESCRIPTION OF THE EMBODIMENTS

Embodiments of the present invention are generally directed to tools for heating composite laminates and methods for forming the same. The tools utilize a centroid of expansion from which a fully-supported facesheet can freely expand.

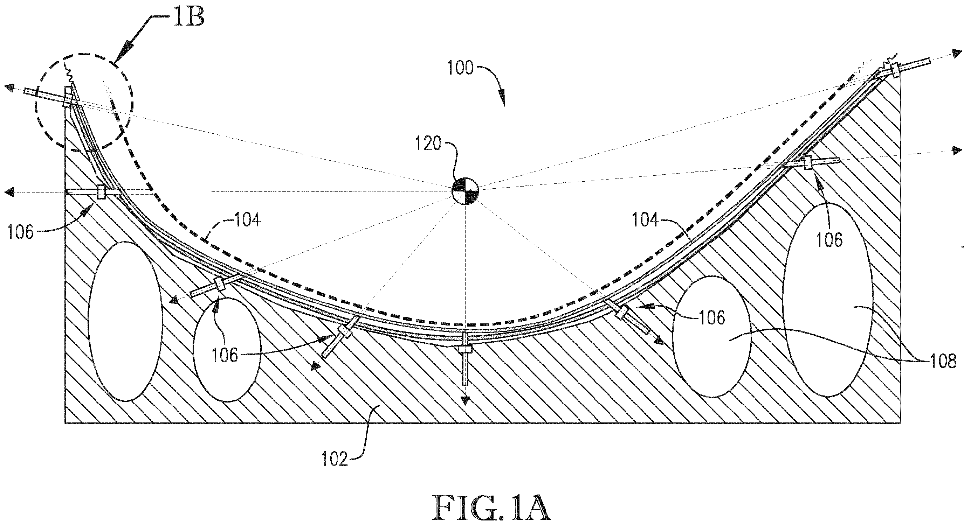

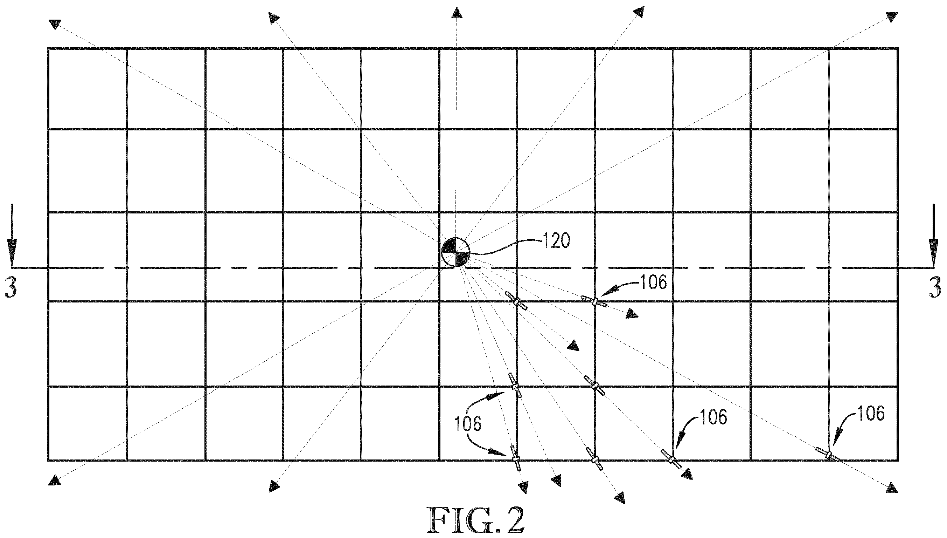

Turning to FIGS. 1A-3, a composite laminate heating tool (hereinafter tool 100) constructed in accordance with an embodiment of the invention is illustrated. The tool 100 broadly comprises a substructure 102, a facesheet 104, and a plurality of expansion joints 106. The tool 100 is used for curing or melting composite laminates to form a composite part.

The substructure 102 supports the facesheet 104 and is a steel weldment from a cut plate or other similar structure. The substructure 102 includes a number of plates, ribs, gussets, flanges, supports, or the like to give the substructure 102 rigidity. The substructure 102 may include material voids 108 such as cutouts, hollow sections, or the like for reducing weight and heating energy input requirements without sacrificing rigidity of the substructure 102. The substructure 102 includes concave or convex contours corresponding to contours of the facesheet 104 (and hence of the composite laminates as they lay on the facesheet 104). In one embodiment, the substructure 102 has a CTE identical to a CTE of the facesheet 104. In another embodiment, the substructure 102 has a CTE slightly or significantly different from the CTE of the facesheet 104. Any differences in CTE between the substructure 102 and the facesheet 104 are accommodated by expansion joints 106 as described below. The substructure 102 may be made at least partially of steel, fiber laminates, Invar metal, or any other suitable material.

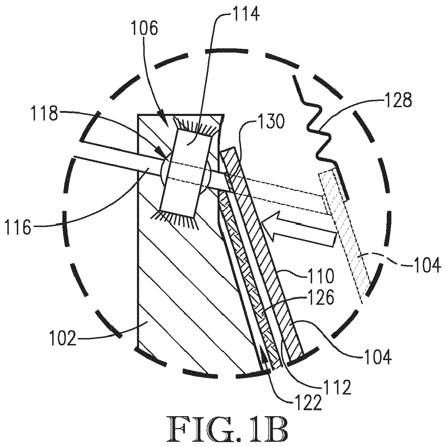

The facesheet 104 is a thin plate-like structure including a laminate side 110 and an opposing backing side 112 (FIG. 1B). The facesheet 104 supports the composite laminates on the laminate side 110 and is in turn supported on the substructure 102 from the backing side 112 via the expansion joints 106. To that end, the facesheet 104 includes concave or convex contours corresponding to contours of the composite laminates. The facesheet 104 is formed of mild steel or similar material via bump forming, stretch forming, 3D printing, or the like.

The plurality of expansion joints 106 interface between the facesheet 104 and the substructure 102 and are substantially similar so only one expansion joint 106 will be described in detail. The expansion joint 106 broadly includes a guide 114 and a support member 116.

As best seen in FIG. 1B, the guide 114 is attached to the substructure 102 and may include a through-hole 118 or other geometry restricting the support member 116 to a single degree of freedom. Alternatively, the guide 114 is attached to the facesheet 104. The guide 114 may be formed of a low thermal conductivity material such as ceramic liner material to minimize heat conductivity. The guide 114 may also have low friction via a low friction coating or lubricant applied thereto. The guide 114 may be a guide bushing, a carriage, or the like. The guide 114 may include a spherical bearing to allow for slight angular variations of the support member 116 thereby reducing the potential for binding.

The support member 116 is attached to the backing side 112 of the facesheet 104 via brazing or other suitable attachment means and extends into or through the guide 114 in radial alignment with a centroid of expansion 120 (described below) of the facesheet 104. Alternatively, the support member 116 is attached to the substructure 102, with the guide 114 being attached to the facesheet 104. The support member 116 (cooperatively with support members 116 of the other expansion joints 106) spaces the facesheet 104 from the substructure 102 to form an expansion gap 122. The support member 116 slides in the guide 114 in radial alignment with the centroid of expansion 120 while being constrained in all other degrees of freedom. The support member 116 may be a pin, a rail, or the like.

With reference to FIGS. 1A, 2, and 3, the centroid of expansion 120 is the point in space from which the facesheet 104 radially expands due to an increase in temperature. The centroid of expansion 120 may be determined via simulation, mathematic calculation, or experimentation. The centroid of expansion 120 does not need to be a point on the facesheet 104 and in many cases is a point spaced from the facesheet 104. The centroid of expansion may in some embodiments be a center of expansion coinciding with a fixed point on the facesheet. An alternative embodiment in which a center of expansion coinciding with a fixed point on a facesheet is used will be described below. The arrows emanating from the centroid of expansion 120 represent directions of radial expansion of which the support members 116 are aligned.

The tool 100 may further comprise a heating component 126 including induction coils, discrete heating components, burners, electrically resistive coating, or conductors for direct Joule heating. In one embodiment, the heating component 126 includes Litz wire induction coils. The heating component 126 may be positioned in the expansion gap 122 and extending or distributed roughly throughout the expansion gap 122 to effect even heating of the facesheet 104.

The above-described tool 100 provides several advantages. For example, the facesheet 104 expands outward from the centroid of expansion 120 without buildup of stress or strain in the facesheet 104. This simplifies design and construction of the tool 100 and minimizes the energy and time needed for effective heating of the composite laminates. In particular, the CTEs of the substructure 102 and the facesheet 104 do not need to be equal to each other. In this way, expensive materials such as Invar metal do not need to be used to construct the tool 100.

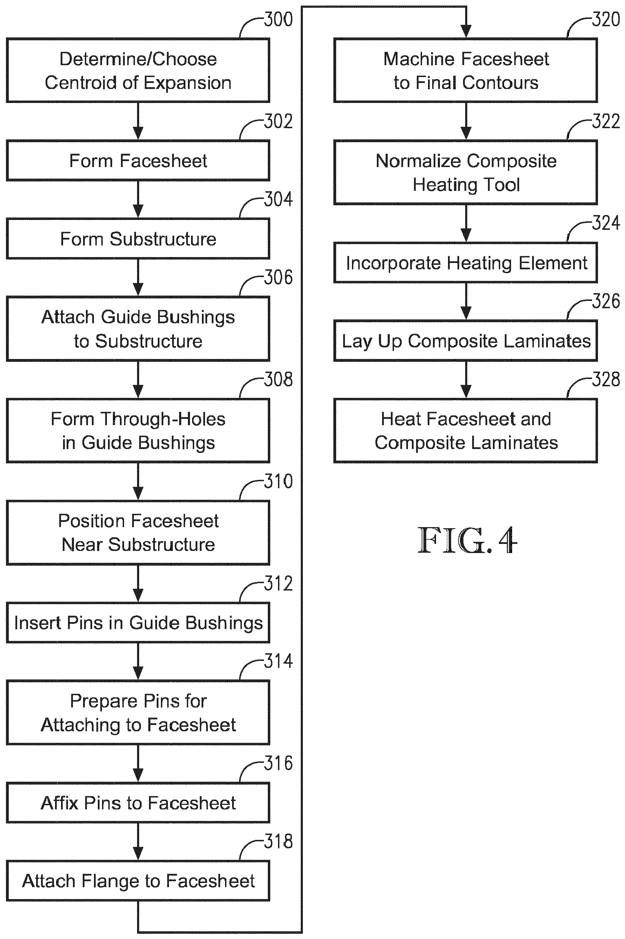

Turning to FIG. 4, a method of forming tool 100 and forming a composite part via the tool 100 will now be described in more detail. First, the tool 100 is designed according to specifications of the part, as shown in block 300. This includes determining the centroid of expansion 120 of the tool 100 via simulation, mathematic calculation, or experimentation. Alternatively, the centroid of expansion may be a center of expansion coinciding with a fixed point on the facesheet. Accordingly, the center of expansion can be chosen as a fixed point (see embodiment described below). Expansion may be scaled in directions that have a higher CTE. The facesheet 104 and/or the substructure 102 may be formed of a material having isotropic properties such that the geometric centroid of the facesheet represents the centroid of expansion 120. The facesheet 104 and/or the substructure 102 may be formed of a material with some anisotropic properties that may require that the location of the centroid of expansion 120 be calculated via finite element analysis or other mathematical scaling technique to compensate for greater growth in certain directions.

The facesheet 104 is then formed via bump forming, stretch forming, 3D printing, or the like, as shown in block 302. The facesheet 104 is fabricated to the rough contour of the desired shape with extra material on the laminate side 110 that can be machined to final contours. The facesheet 104 may also undergo heat treatment normalization after forming.

The substructure 102 is then fabricated, as shown in block 304. This may include removing material to form material voids 108, thereby reducing weight of the substructure 102.

The guides 114 are then attached to the substructure 102 (or alternatively to the facesheet 104, as shown in block 306. For example, the guides 114 may be welded or bolted to the substructure 102.

Through-holes 118 are then formed in the guides 114, as shown in block 308. The through-holes are radially aligned with the centroid of expansion 120. The through-holes 118 may be formed via a 5-axis computer-numerical-control (CNC) machine or any other suitable mechanism. Alternatively, the through-holes 118 could be aligned via lasers or any other suitable alignment means. As yet another alternative, the through-holes 118 may be formed in the guides 114 before the guides 114 are attached to the substructure 102, and then the guides 114 are attached to the substructure 102 such that the through-holes 118 are radially aligned with the centroid of expansion 120.

The facesheet 104 is then positioned near the substructure 102 with the expansion gap 122 between the facesheet 104 and the substructure 102, as shown in block 310. The expansion gap 122 may be established via shims placed between the facesheet 104 and the substructure 102 or space bars and temporary tack welds. To that end, the backing side 112 is offset from nearby edges or sides of the substructure 102 such that sufficient clearance exists for the facesheet 104 to expand when heated without contacting the substructure 102.

The support members 116 are then inserted into the through-holes 118 of the guides 114, as shown in block 312. The support members 116 are also grinded or sawed to fit flush or mate tightly against the backing side 112 of the facesheet 104. Alternatively, the support members 116 are attached to the substructure 102. The support members 116 do not need to be in the through-holes 118 (or can be removed from the through-holes 118) to be ground.

Brazing foil 130 and flux is then inserted between the support members 116 and the facesheet 104, as shown in block 314. This aids in forming a metallurgical bond in the next step.

A metallurgical bond is then formed between the support members 116 and facesheet 104 via brazing, bonding, welding, or any other suitable means of attachment, as shown in block 316. Heating may be achieved via induction, electrical resistance, or the like. The support members 116 should be spaced sufficiently to support the facesheet 104 during tool use and any post assembly processes such as machining, polishing, or coating.

An unheated flange 128 having strain relief corrugations and positioned near ends of the facesheet 104 may then be brazed, welded, or otherwise attached to the facesheet 104, as shown in block 318.

The facesheet 104 is then machined to final desired contours, polished, and/or coated, as shown in block 320. Thermal expansion compensation is provided in the final desired contours.

The tool 100 is then subjected to final normalization heat treatment, as shown in block 322. This relieves stress remaining in the tool 100. Heating may be achieved via induction, electrical resistance, a heat treat furnace, or the like.

The heating component 126 is then incorporated into the tool 100, as shown in block 324. This may include installing the heating component 126 in the expansion gap 122 so that the heating component 126 heats the facesheet 104 evenly.

Composite laminates are then laid up on the laminate side 110 of the facesheet 104, as shown in block 326. For example, a first layer is laid up on the laminate side 110 and then a second layer is laid up on the first layer.

The facesheet 104 and composite laminates are then heated via the heating component 126, as shown in block 328. Importantly, the substructure 102 does not need to be heated.

The facesheet 104 expands from the centroid of expansion 120, but because the facesheet 104 is not fixed in the radial directions of expansion from the centroid of expansion 120, the facesheet 104 can expand without a reaction force from the non-expanding substructure 102 as the support members 116 slide in the guides 114. On the other hand, because each support member 116 has only a single degree of freedom and no two support members 116 have the same axis, the facesheet 104 is rigidly supported in the substructure 102. This allows the tool 100 to maintain its shape and withstand loads that occur during use. Loads such as pressure exerted by hand layup, mechanic weight, automated fiber placement (AFP) head forces, inertial forces during transport, and other unexpected forces can be reacted through the support members 116 that are not free to move in the direction of the load.

The above-described method provides several advantages. For example, the facesheet 104 is configured to expand outward from the centroid of expansion 120 without buildup of stress or strain in the facesheet 104. This simplifies design and construction of the tool 100 and minimizes the energy and time needed for effective heat treating the composite laminates. In particular, the CTEs of the substructure 102 and the facesheet 104 do not need to be equal to each other. Expensive materials such as Invar metal do not need to be used to construct the substructure 102.

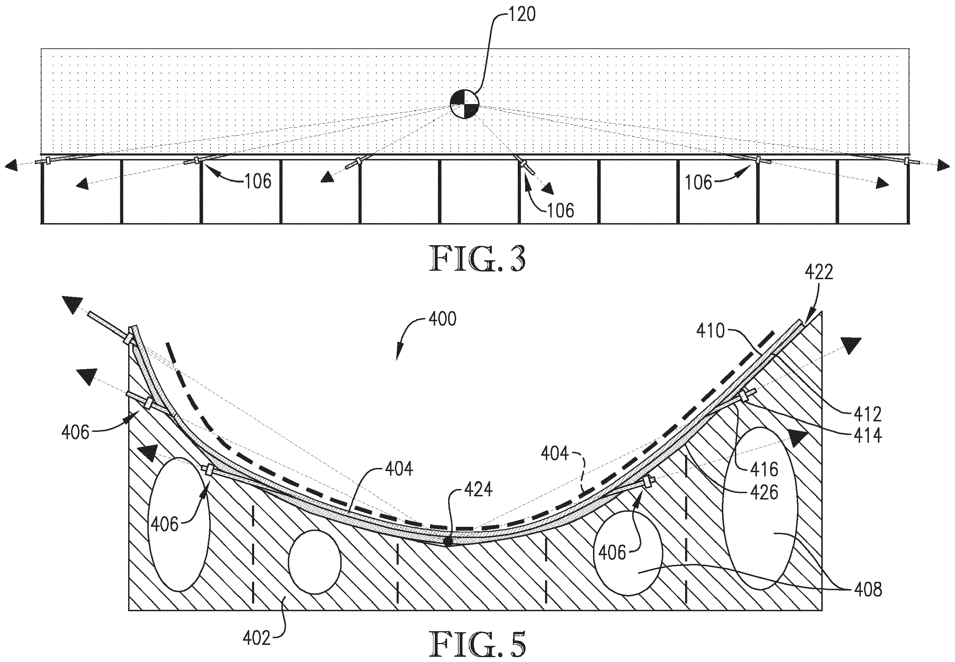

Turning to FIG. 5, a composite laminate heating tool (hereinafter tool 400) constructed in accordance with another embodiment of the invention is illustrated. The tool 400 broadly comprises a substructure 402, a facesheet 404, and a plurality of expansion joints 406. The tool 400 is used for curing or melting composite laminates to form a composite part.

The substructure 402 supports the facesheet 404 and is a steel weldment from a cut plate or other similar structure. The substructure 402 includes a number of plates, ribs, gussets, flanges, supports, or the like to give the substructure 402 rigidity. The substructure 402 may include material voids 408 such as cutouts, hollow sections, or the like for reducing weight and heating energy input requirements without sacrificing rigidity of the substructure 402. The substructure 402 includes concave or convex contours corresponding to contours of the facesheet 404 (and hence of the composite laminates as they lay on the facesheet 404). In one embodiment, the substructure 402 has a CTE identical to a CTE of the facesheet 404. In another embodiment, the substructure 402 has a CTE slightly or significantly different from the CTE of the facesheet 404. Any differences in CTE between the substructure 402 and the facesheet 404 are accommodated by expansion joints 406 as described below. The substructure 402 may be made at least partially of aluminum, steel, fiber laminates, Invar metal, or any other suitable material.

The facesheet 404 is a thin plate-like structure including a laminate side 410 and an opposing backing side 412. The facesheet 404 supports the composite laminates on the laminate side 410 and is in turn supported on the substructure 402 from the backing side 412 via the expansion joints 406. To that end, the facesheet 404 includes concave or convex contours corresponding to contours of the composite laminates. The facesheet 404 is formed of mild steel or similar material via bump forming, stretch forming, 3D printing, or the like.

The plurality of expansion joints 406 interface between the facesheet 404 and the substructure 402 and are substantially similar so only one expansion joint 406 will be described in detail. The expansion joint 406 broadly includes a guide 414 and a support member 416.

The guide 414 is attached to the substructure 402 and includes a through-hole restricting the support member 416 to a single degree of freedom. The guide 414 may be formed of a low thermal conductivity material such as ceramic liner material to minimize heat conductivity. The guide 414 may also have low friction via a low friction coating or lubricant applied thereto. The guide 414 may be a guide bushing, a carriage, or the like. The guide 414 may include a spherical bearing to allow for slight angular variations of the support member 416 thereby reducing the potential for binding.

The support member 416 is attached to the backing side 412 of the facesheet 404 via brazing or other suitable attachment means and extends into or through the guide 414 in radial alignment with a center of expansion 424 (described below) of the facesheet 404. The support member 416 (cooperatively with support members 416 of the other expansion joints 406) spaces the facesheet 404 from the substructure 402 to form an expansion gap 422. The support member 416 slides in the guide 414 in radial alignment with the center of expansion 424 while being constrained in all other degrees of freedom. The support member 416 may be a pin, a rail, or the like.

The centroid of expansion as disclosed herein can be a center of expansion that coincides with a fixed point on the facesheet. The center of expansion 424 is the point from which the facesheet 404 radially expands due to an increase in temperature. In this embodiment, the center of expansion 424 is chosen by attaching the facesheet 404 to the substructure 402 at a single, fixed point. The support members 416 are aligned radially from the fixed point and hence from the center of expansion 424. A support member is typically not needed at the fixed point. The tool 400 is thus simplified by eliminating the need to determine a centroid of expansion and allows the center of expansion 424 to be chosen.

The tool 400 may further comprise a heating component 426 including induction coils, discrete heating components, burners, electrically resistive coating, or conductors for direct Joule heating. In one embodiment, the heating component 426 includes Litz wire induction coils. The heating component 426 may be positioned in the expansion gap 422 and extending or distributed roughly throughout the expansion gap 422 to effect even heating of the facesheet 404.

### ADDITIONAL CONSIDERATIONS

The above detailed description of the invention references the accompanying drawings that illustrate specific embodiments in which the invention can be practiced. The embodiments are intended to describe aspects of the invention in sufficient detail to enable those skilled in the art to practice the invention. Other embodiments can be utilized and changes can be made without departing from the scope of the present invention. Numerous specific details are described to provide a thorough understanding. However, in certain instances, well-known or conventional details are not described in order to avoid obscuring the description. References to one embodiment or an embodiment in the present disclosure are not necessarily references to the same embodiment; and such references mean at least one.

The above detailed description is, therefore, not to be taken in a limiting sense. The scope of the present invention is defined only by the appended claims, along with the full scope of equivalents to which such claims are entitled. Furthermore, the use of headings herein is merely provided for ease of reference, and shall not be interpreted in any way to limit this disclosure.

References to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment and are not necessarily all referring to separate or alternative embodiments mutually exclusive of other embodiments. Moreover, various features are described which may be exhibited by one embodiment and not by others. Similarly, various requirements are described which may be requirements for one embodiment but not for other embodiments. Unless excluded by explicit description and/or apparent incompatibility, any combination of various features described in this description is also included here.

In the foregoing specification, the disclosure has been described with reference to specific exemplary embodiments thereof. It will be evident that various modifications may be made thereto without departing from the broader spirit and scope as set forth in the following claims. The specification and drawings are, accordingly, to be regarded in an illustrative sense rather than a restrictive sense.

Although the invention has been described with reference to the embodiments illustrated in the attached drawing figures, it is noted that equivalents may be employed and substitutions made herein without departing from the scope of the invention.

## Claims

1. A tool for heating composite laminates, the tool comprising:
a substructure;
a facesheet supported on the substructure; and
a plurality of expansion joints spaced apart from each other, each of the plurality of expansion joints including:
a guide attached to one of the substructure and the facesheet; and
a support member translatable relative to the guide and aligned radially from a centroid of expansion so as to have a single degree of freedom such that the facesheet is fully supported by the substructure via the support members of the plurality of expansion joints and can freely expand relative to the centroid of expansion.

2. The tool of claim 1, further comprising a heating component having at least one of induction coils, discrete heating components, burners, electrically resistive coating, and conductors.

3. The tool of claim 2, wherein the substructure includes an expansion gap and wherein the heating component is positioned in the expansion gap such that the heating component evenly heats the facesheet; and/or
wherein the substructure defines a plurality of material voids for reducing a heating energy input requirement of the tool.

4. The tool of any preceding claim, wherein the heating component includes Litz wire induction coils.

5. The tool of any preceding claim, wherein the substructure has a different coefficient of thermal expansion (CTE) from a CTE of the facesheet.

6. The tool of any preceding claim, wherein the support members are attached to the facesheet via at least one of brazing, soldering, and welding.

7. The tool of any preceding claim, wherein the guides are carriages and the support members are rails entrained in the carriages.

8. The tool of any preceding claim, wherein the centroid of expansion is determined via finite element analysis.

9. The tool of any preceding claim, wherein the facesheet is formed of an isotropic material such that the geometric centroid of the facesheet represents the centroid of expansion; or wherein the facesheet is formed of an anisotropic material.

10. The tool of claim 1, wherein the guide includes one or more of:
a spherical bearing thus allowing slight angular variations of the support member;
a through-hole formed via a 5-axis computer-numerical-control (CNC) machine;
a through-hole aligned with the centroid of expansion via lasers;
a through-hole formed in the guide before the guide is attached to the substructure.

11. The tool of any preceding claim, further comprising an unheated flange having strain relief corrugations attached to the facesheet.

12. The tool for heating composite laminates according to any preceding claim, wherein the centroid of expansion is a centre of expansion coinciding with a fixed point on the facesheet; wherein the support member is translatable relative to the guide and aligned radially from the center of expansion so as to have a single degree of freedom such that the facesheet is fully supported by the substructure via the support members of the plurality of expansion joints and can freely expand relative to the center of expansion,
wherein the facesheet is attached to the substructure at a fixed point so that the center of expansion coincides with the fixed point.

13. The tool of claim 12, wherein the fixed point is near a midpoint of the facesheet.

14. The tool of any preceding claim, wherein the facesheet is U-shaped.

15. A method of forming a tool for heating composite laminates, the method comprising steps of:
determining a centroid of expansion of the tool;
forming a facesheet having a first surface for laying up the composite laminates thereon and a second surface opposite the first surface;
fabricating a substructure;
attaching guides to the substructure;
forming through-holes in the guides so that the through-holes are radially aligned with the centroid of expansion;
inserting support members into the through-holes;
bonding the support members to the second surface of the facesheet to form an expansion gap between the facesheet and the substructure;
subjecting the facesheet and the substructure to normalization heat treatment; and
installing a heating component in the expansion gap,
wherein the support members are translatable relative to the guide and radially aligned with the centroid of expansion so as to have a single degree of freedom such that the facesheet is fully supported by the substructure via the support members of the plurality of expansion joints and can freely expand relative to the centroid of expansion.
